# EUROPEAN PATENT APPLICATION

(11) **EP 2 309 723 A1**
(43) Date of publication of application: **13.04.2011**
(21) Application number: 09797793.8
(22) Date of filing: 25.06.2009
(51) Int. Cl.: H04N 5/232, G03B 15/00, G06T 1/00, H04N 101/00

(54) **IMAGING DEVICE, IMAGING METHOD AND PROGRAM**

(30) Priority: 17.07.2008 JP 2008186179
(71) Applicant: NEC Corporation, Minato-ku Tokyo 108-8001 (JP)
(72) Inventor: KATOH, Satoshi, Tokyo 108-8001 (JP)
(74) Representative: Heunemann, Dieter
(86) International application number: PCT/JP2009/061646
(87) International publication number: WO 2010/007865

(57) **Abstract**

An imaging apparatus includes: recording memory (113) for storing an image of a subject; detection unit (105b) that detects the faces of people from a signal realized by imaging of an image of a subject; evaluation unit (105c) that, when detection unit (105b) detects faces of a plurality of people, evaluates each of the expressions of the faces of a plurality of people that were detected and computes a plurality of expression values in which the evaluated expressions are each converted to a numerical value; and control unit (110) that computes a deciding expression value from a plurality of expression values for determining whether the image of the subject is to be stored or not and that causes storage of the image of the subject in recording memory (113) when the deciding expression value is equal to or greater than a predetermined threshold value.

## Description

### Technical Field

The present invention relates to an imaging apparatus, an imaging method, and a program that use an image sensor to capture an image, and more particularly to an imaging apparatus, an imaging method, and program that, by determining the state of a subject, automatically store an image that has been obtained by imaging.

### Background Art

Recent years have seen an increasing demand for portable telephones that incorporate camera or electronic still cameras as portable imaging apparatuses that incorporate compact camera modules. With this trend, users' demands for camera performance and functions have both intensified and diversified.

The chief demands of users regarding portable imaging apparatuses are broadly divided between demands relating to performance such as resolution, color reproducibility, and sensitivity and demands relating to improving utility such as increased multi-functionality, shortening of various processing times, and improved user interface.

The development of portable imaging apparatuses to this point has focused on issues relating to performance and competition for superiority in advertised capabilities such as pixel count. The specifications and capabilities of portable imaging apparatuses are currently reaching a state of equilibrium, and with sufficient capabilities having been achieved, users' demands are shifting toward issues relating to the improvement of utility.

To this end, recent developments have focused particularly on incorporating functions for correcting camera shake and functions for detecting faces to realize AF (Auto Focus) and AE (Auto Exposure), and the development of new technology is accelerating for achieving imaging that accords with a user's intent. Imaging refers to the operation of storing images obtained by image capture in a storage means belonging to the imaging apparatus.

It is here assumed that the most frequent cause for a user's dissatisfaction with an image is when the person that is the subject of imaging does not have a pleasing expression (such as a smile).

A technology is therefore sought for recognizing the expression on the face of the person who is the subject of imaging and for capturing an image when the person's facial expression is a predetermined expression (such as a smile). Such technology is disclosed in, for example, Patent Document 1.

In the technology disclosed in Patent Document 1, a person's face is detected from an image signal of the image subject that is obtained by imaging, and the detected facial expression is then evaluated based on fixed conditions. Imaging is carried out when the evaluated facial expression meets the fixed conditions. Similarly, when a plurality of people are included in the subject, the facial expressions of each of the people are evaluated based on the fixed conditions and imaging is carried out automatically when each of the evaluated facial expressions meets the fixed conditions.

### Prior-Art Documents

### Patent Documents

Patent Document 1: Japanese Patent Application No. 2008-42319

### Disclosure of the Invention

### Problem to be Solved by the Invention

As described hereinabove, using the technology disclosed in Patent Document 1 is believed to enable the capture of an image intended by the user even when a plurality of people are included in the subject of imaging because imaging is carried out automatically when the facial expressions of each of the people attain a predetermined expression (such as a smiling face).

However, if it is considered that, depending on the imaged scene, there are cases in which imaging should not be carried out based on the result of evaluating the facial expressions of a plurality of people by the same conditions, the problem arises that the result will not follow the user's intent even when imaging is carried out automatically based on the facial expressions of a plurality of people.

It is an object of the present invention to provide an imaging apparatus, imaging method, and program that enable automatic imaging that accords with the user's intent depending on the imaged scene even when the subject of imaging includes a plurality of people.

### Means for Solving the Problem

The present invention for achieving the above-described object includes:
a storage means for storing the image of a subject;
a detection means that detects the face of a person from a signal realized by capturing the image of the subject;
an evaluation means that, when the faces of a plurality of people are detected by the detection means, evaluates each of the expressions of the faces of the plurality of people that were detected and computes a plurality of expression values in which each of the evaluated expressions is converted to a numerical value; and
a control means that computes a deciding expression value based on the plurality of expression values for determining whether the image of the subject is to be stored or not, and when the deciding expression value is equal to or greater than a predetermined threshold value, causes the image of the subject to be stored in the storage means.

The imaging method of the present invention is an imaging method in an imaging apparatus that includes a storage means for storing an image of the subject and includes processes of:
detecting the face of person from a signal realized by capturing an image of a subject;
when the faces of a plurality of people are detected, evaluating the expressions of each of the faces of the plurality of people that were detected and computing a plurality of expression values in which each of the expressions that were evaluated is converted to a numerical value; and
computing a deciding expression value based on the plurality of expression values to determine whether the image of the subject is to be stored or not, and when the deciding expression value is at least a predetermined threshold value, storing the image of the subject in the storage means.

The program of the present invention is a program for causing an imaging apparatus having a storage means for storing an image of a subject to execute functions of:
detecting the face of a person from a signal realized by capturing an image of the subject;
when the faces of a plurality of people are detected, evaluating the expressions of each of the faces of the plurality of people that were detected and computing a plurality of expression values in which each of the expressions that were evaluated is converted to a numerical value; and
computing a deciding expression value from the plurality of expression values to determine whether the image of the subject is to be stored or not, and when the deciding expression value is equal to or greater than a predetermined threshold value, storing the image of the subject in the storage means.

### Effect of the Invention

The present invention is constituted as described hereinabove and is therefore capable of automatically realizing imaging according to the user's intent without losing imaging opportunities in a variety of imaged scenes.

### Brief Description of the Drawings

FIG. 1 shows the first exemplary embodiment of the imaging apparatus of the present invention;
FIG. 2 is a flow chart for explaining an example of the operation when imaging a subject that includes a plurality of people in the imaging apparatus shown in FIG. 1;
FIG. 3 shows a plurality of faces enclosed in a plurality of face display frames displayed in the display unit shown in FIG. 1;
FIG. 4 shows a plurality of faces enclosed in a plurality of face display frames displayed in the display unit shown in FIG. 1;
FIG. 5 shows a plurality of faces enclosed in a plurality of face display frames displayed in the display unit shown in FIG. 1;
FIG. 6 shows a plurality of faces enclosed in a plurality of face display frames displayed in the display unit shown in FIG. 1;
FIG. 7 shows a plurality of faces enclosed in a plurality of face display frames displayed in the display unit shown in FIG. 1;
FIG. 8 shows the second exemplary embodiment of the imaging apparatus of the present invention;
FIG. 9 is a flow chart for explaining an example of the operations when imaging a subject that includes a plurality of people in the imaging apparatus shown in FIG. 8;
FIG. 10 shows a plurality of faces enclosed in a plurality of face display frames displayed in the display unit shown in FIG. 8;
FIG. 11 is a flow chart for explaining another example of the operations when imaging a subject that includes a plurality of people in the imaging apparatus shown in FIG. 1; and
FIG. 12 shows a plurality of faces enclosed in a plurality of face display frames displayed in the display unit shown in FIG. 1.

### Best Mode for Carrying Out the Invention

Exemplary embodiments of the present invention are next described with reference to the accompanying drawings.

### First Exemplary Embodiment

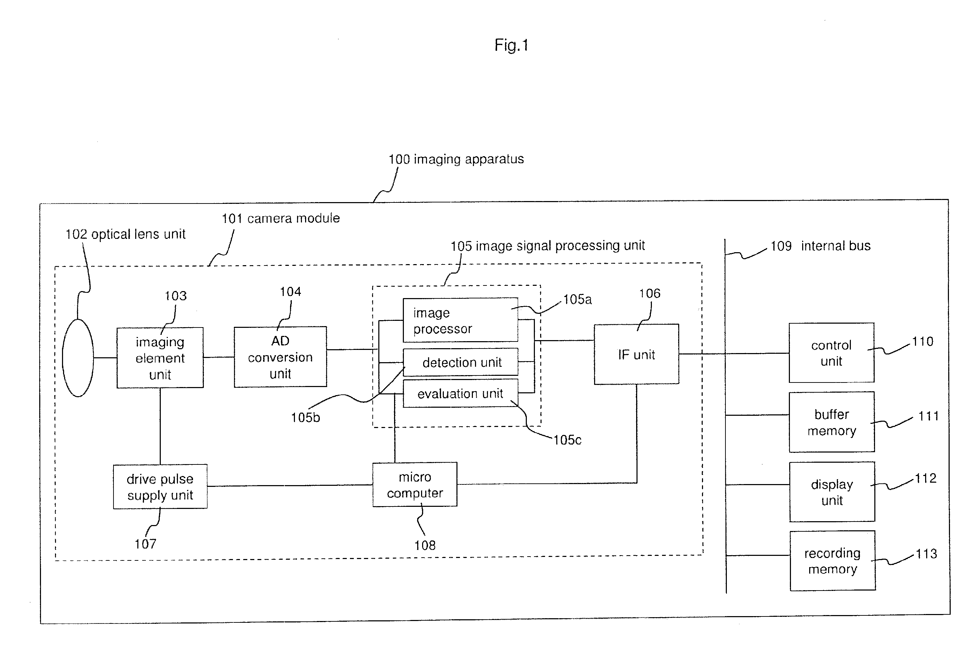

FIG. 1 shows the first exemplary embodiment of the imaging apparatus of the present invention.

As shown in FIG. 1, imaging apparatus 100 of the present exemplary embodiment is provided with camera module 101, control unit 110, buffer memory 111, display unit 112, and recording memory 113 that is a storage means.

As shown in FIG. 1, camera module 101 is provided with: optical lens unit 102, imaging element unit 103, AD (analog/digital) conversion unit 104, image signal processing unit 105, IF (interface) unit 106, drive pulse supply unit 107, and microcomputer 108.

Optical lens unit 102 condenses light that is reflected by the subject.

Imaging element unit 103 converts light that was condensed by optical lens unit 102 to an analog image signal and transmits the converted analog image signal to AD conversion unit 104.

AD conversion unit 104, upon receiving the analog image signal that was transmitted from imaging element unit 103, converts the analog image signal that was received to a digital image signal and transmits the converted signal to image signal processing unit 105.

Image signal processing unit 105 is provided with image processor 105a, detection unit 105b, and evaluation unit 105c.

Image processor 105a carries out image processing such as color interpolation, color correction, and picture quality adjustment based on the digital image signal transmitted from AD conversion unit 104 and image processing to display face display frames indicating that the portions of people's faces detected by detection unit 105b are faces. Image processor 105a then, upon receiving from microcomputer 108 an image storage instruction to store the image based on the digital image signal received from AD conversion unit 104 in buffer memory 111, transmits the digital image signal received from AD conversion unit 104 to buffer memory 111 by way of IF unit 106 and internal bus 109.

Detection unit 105b detects people's faces from the image based on the digital image signal transmitted from AD conversion unit 104.

Evaluation unit 105c evaluates the expressions of the people's faces that were detected by detection unit 105b and computes expression values in which the evaluated expressions are each converted to a numerical value. Evaluation unit 105c then transmits the computed expression values to control unit 110 by way of IF unit 106 and internal bus 109.

IF unit 106 intermediates in the transmission and reception of control signals between microcomputer 108 and control unit 110.

Drive pulse supply unit 107 supplies pulses for driving imaging element unit 103.

Microcomputer 108 controls image signal processing unit 105 and drive pulse supply unit 107 based on control signals that enter camera module 101 by way of IF unit 106. In addition, upon receiving an image capture instruction transmitted from control unit 110 instructing the capture of an image, microcomputer 108 transmits to image signal processing unit 105 an image storage instruction to store the image based on the digital image signal in buffer memory 111.

Internal bus 109 intermediates the transmission and reception of digital image signals and control signals between camera module 101 and control unit 110, buffer memory 111, display unit 112, and recording memory 113.

Control unit 110 controls the operation of imaging apparatus 100, a representative example of operations being offered below:
(1) A threshold value that serves as a reference for determining whether to capture an image is stored.
(2) Expression values transmitted from image signal processing unit 105 are received by way of IF unit 106 and internal bus 109.
(3) A deciding expression value that is used for determining whether to capture an image is computed from the expression values that were received.
(4) The computed deciding expression value is compared with the threshold value and a determination of whether to capture an image is implemented,
(5) When it is determined to capture an image, an image capture instruction instructing that an image be captured is transmitted to microcomputer 108 by way of internal bus 109 and IF unit 106.

Buffer memory 111 receives the digital image signal transmitted from image signal processing unit 105 by way of IF unit 106 and internal bus 109 and temporarily stores an image based on the received digital image signal.

Display unit 112 receives the digital image signal that was transmitted from image signal processing unit 105 by way of IF unit 106, internal bus 109, and buffer memory 111 and displays an image based on the received digital image signal.

Recording memory 113 stores the image based on the digital image signal that is stored in buffer memory 111 by means of instructions issued by control unit 110.

Operations are next described for a case in which an image is captured of a subject that includes a plurality of people by the imaging apparatus configured as described hereinabove.

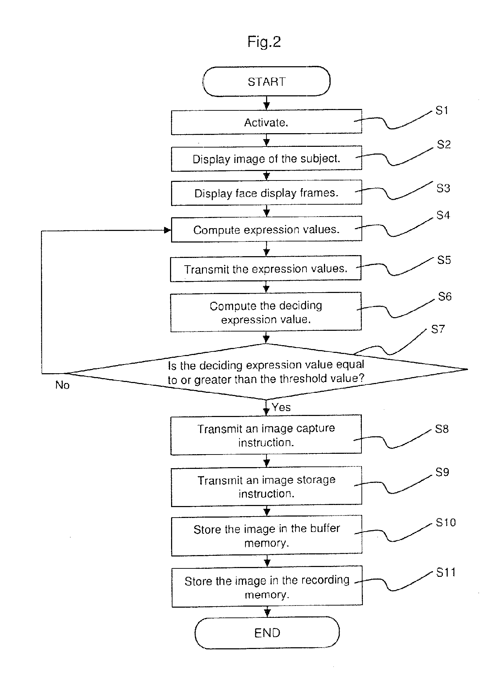

FIG. 2 is a flow chart for explaining an example of the operations in imaging apparatus 100 shown in FIG. 1 when capturing the image of a subject that includes a plurality of people.

Power is first introduced to imaging apparatus 100 by the user and imaging apparatus 100 is activated (Step S1),

When imaging apparatus 100 is activated, control unit 110 executes initialization. This initialization implements initial value settings such as the operating clock, the angle of view for an image, and picture quality settings of imaging apparatus 100 and enables imaging by imaging apparatus 100.

Optical lens unit 102 next condenses the light reflected by the subject.

Imaging element unit 103 then converts the light that was condensed by optical lens unit 102 to an analog image signal and transmits the converted analog image signal to AD conversion unit 104.

AD conversion unit 104 that has received the analog image signal transmitted from imaging element unit 103 converts the received analog image signal to a digital image signal and transmits the digital image signal to image signal processing unit 105.

Image processor 105a of image signal processing unit 105 that has received the digital image signal transmitted from. AD conversion unit 104 implements image processing such as color interpolation, color correction and picture quality adjustment in the image based on the received digital image signal and transmits the processed image to buffer memory 111.

Display unit 112 that has received the image signal transmitted from image signal processing unit 105 by way of IF unit 106, internal bus 109, and buffer memory 111 displays the image of the subject based on the received image signal (Step S2).

The user here decides on the composition of the subject while viewing the image of the subject that is supplied to display unit 112.

Detection unit 105b of image signal processing unit 105 then detects the faces of the people from the digital image signal that was received from AD conversion unit 104 and reports this detection to image processor 105a.

Image processor 105a, having received notification from detection unit 105b, transmits to buffer memory 111a digital image signal that has undergone image processing in which face display frames are displayed on the portions of people's faces that were detected.

Display unit 112, having received the image signal transmitted from image signal processing unit 105 by way of IF unit 106, internal bus 109, and buffer memory 111, displays an image in which face display frames are superposed on the image of the subject that was displayed in Step S2 (Step S3).

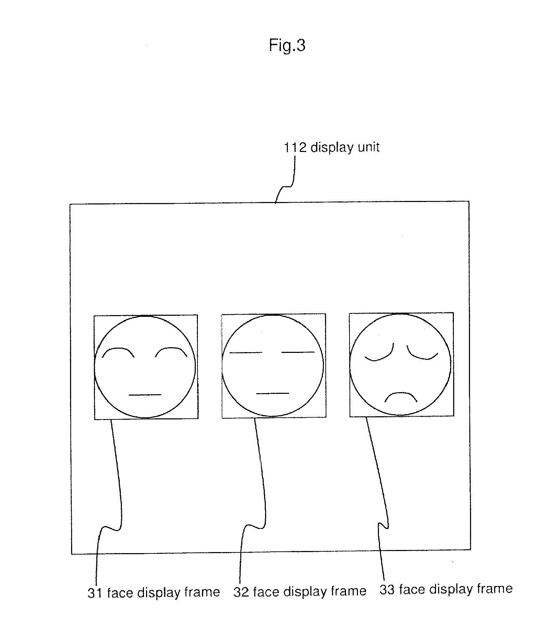

FIG. 3 shows an example of a plurality of faces enclosed in a plurality of face display frames that are displayed on display unit 112 shown in FIG. 1. In the interest of simplifying the explanation, FIG. 3 omits the representation of portions other than the faces that are enclosed in face display frames.

As shown in FIG. 3, face display frames 31-33 are displayed at each of the portions of the faces of a plurality of people of the subject in display unit 112 shown in FIG. 1.

Evaluation unit 105c of image signal processing unit 105 next evaluates the expressions of each of the people's faces detected by detection unit 105b and computes an expression value of each (Step S4). As one method of computing the expression values, sample images of expressions are held in image signal processing unit 105 and computation is then carried out by comparing these sample images with the expressions of people's faces that were detected.

Evaluation unit 105c then transmits expression values of each of the faces that were computed to control unit 110 by way of IF unit 106 and internal bus 109 (Step S5).

Control unit 110, having received the plurality of expression values that were transmitted from image signal processing unit 105, uses a predetermined method to compute a deciding expression value from the plurality of expression values that were received (Step S6). A plurality of methods exists for computing the deciding expression value from the plurality of expression values, and the user is able to select the method depending on the imaged scene. The methods of computing the deciding expression value will be described later.

Control unit 110 next compares the deciding expression value that was computed with the threshold value that it has stored (Step S7).

If, as the result of comparing the computed deciding expression value with the threshold value, the computed deciding expression value is equal to or greater than the threshold value, control unit 110 transmits an image capture instruction to microcomputer 108 by way of internal bus 10⁹ and IF unit 106 (Step S8).

Microcomputer 108, having received the image capture instruction that was transmitted from control unit 110, transmits to image signal processing unit 105 an image store instruction for causing image signal processing unit 105 to store the image based on the received digital image signal in buffer memory 111 (Step S9).

On the other hand, if, as the result of comparing the computed deciding expression value with the threshold value, the computed deciding expression value is lower than the threshold value, control unit 110 does not transmit an image capture instruction to microcomputer 108. In this case, the process returns to the operation of Step S4 and image signal processing unit 105 continues the operation of computing expression values and the operation of transmitting the computed expression values to control unit 110. In addition, control unit 110 continues the operations of using a predetermined method to compute a deciding expression value from the plurality of expression values received from image signal processing unit 105 and comparing the deciding expression value with the threshold value.

Image processor 105a of image signal processing unit 105 that has received an image store instruction that was transmitted from microcomputer 108 transmits the digital image signal that was received from AD conversion unit 104 to buffer memory 111 by way of IF unit 106 and internal bus 109.

Buffer memory 111 that has received the digital image signal that was transmitted from image processing unit 105 by way of IF unit 106 and internal bus 109 temporarily stores the image that is based on the received digital image signal (Step S10).

Control unit 110 next acquires the image that is stored in buffer memory 111, implements image processing necessary for storing the image in recording memory 113, and stores the image that has undergone image processing in recording memory 113 (Step S11). Image capture is completed by this operation.

The operations described hereinabove are for a case of imaging a subject that includes a plurality of people in the imaging apparatus of the present exemplary embodiment.

An actual example is next described with reference to the accompanying figures regarding the method in which control unit 110 computes the deciding expression value in Step S6 and carries out the comparison of the deciding expression value that was computed and the threshold value in the above-described operation flow in Step S7.

It is here assumed that expression values are computed by comparing expressions of faces that were detected with sample images held by image signal processing unit 105. More specifically, image signal processing unit 105 computes the rate at which the facial expressions that were detected deviate from the sample images and then takes as an expression value a value that indicates this rate of deviation by percentage. The threshold value is here assumed to be 70%.

As the method of computing the deciding expression value, a method will first be described in which the highest expression value among a plurality of expression values is taken as the deciding expression value.

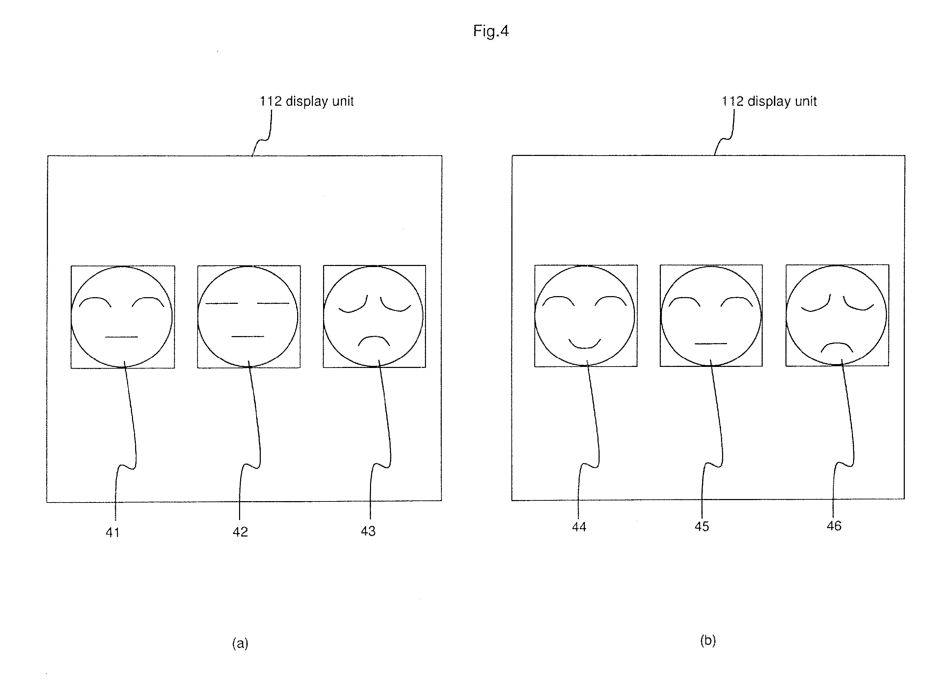

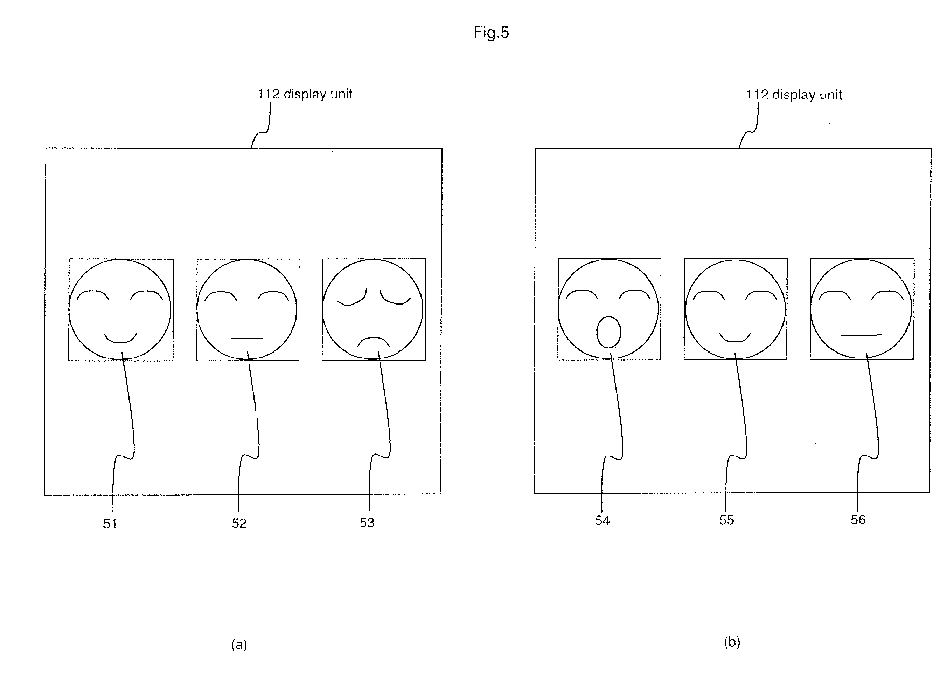

FIG. 4 shows a plurality of faces enclosed in a plurality of face display frames that are displayed on display unit 112 shown in FIG. 1. FIG. 4(a) showing a case in which the highest expression value among the expression values of a plurality of faces is lower than the threshold value, and FIG. 4(b) showing a case in which the highest expression value among the expression values of a plurality of faces is equal to or greater than the threshold value. In the interest of simplifying the explanation, FIG. 4 omits the representation of portions other than the faces that are enclosed in face display frames. FIGs. 5-7 that are referenced in the following explanation are similarly abbreviated.

In the example shown in FIG. 4(a), assuming that the expression values of three faces 41-43 are 50%, 5%, and 0%, respectively, the face showing the highest expression value is face 41 (expression value 50%), whereby 50%, which is the expression value of this face 41, becomes the deciding expression value. Accordingly, control unit 110 determines that the deciding expression value is lower than the threshold value and does not transmit an image capture instruction to microcomputer 108 in Step S7 of the above-described operation flow.

On the other hand, in the example shown in FIG. 4(b), assuming that the expression values of three faces 44-46 are 80%, 50%, and 0%, respectively, the face showing the highest expression value is face 44 (expression value 80%), whereby 80%, which is the expression value of this face 44, becomes the deciding expression value. Accordingly, control unit 110 determines that the deciding expression value is equal to or greater than the threshold value and transmits an image capture instruction to microcomputer 108 in Step S7 of the above-described operation flow.

A case is next described in which, as the method of computing the deciding expression value, the lowest expression value of the plurality of expression values is taken as the deciding expression value.

FIG. 5 shows a plurality of faces enclosed in a plurality of face display frames that are displayed on display unit 112 shown in FIG. 1, FIG. 5(a) showing a case in which the lowest expression value among the expression values of a plurality of faces is lower than the threshold value, and FIG. 5(b) showing a case in which the lowest expression value among the expression values of a plurality of faces is equal to or greater than the threshold value.

In the example shown in FIG. 5(a), assuming that the expression values of three faces 53 are 80%, 50%, and 0%, respectively, the face showing the lowest expression value is face 53 (expression value 0%). The expression value of 0% of this face 53 therefore becomes the deciding expression value. Accordingly, control unit 110 determines that the deciding expression value is lower than the threshold value and does not transmit an image capture instruction to microcomputer 108 in Step S7 of the above-described operation flow.

On the other hand, in the example shown in FIG. 5(b), assuming that the expression values of three faces 54-56 are 100%, 80%, and 70%, respectively, the face showing the lowest expression value is face 56 (expression value 70%). The expression value 70% of this face 56 becomes the deciding expression value. Accordingly, control unit 110 determines that the deciding expression value is equal to or greater than the threshold value and transmits an image capture instruction to microcomputer 108 in Step S7 of the above-described operation flow.

A case is next described in which, as the method of computing the deciding expression value, the average value of the plurality of expression values is taken as the deciding expression value.

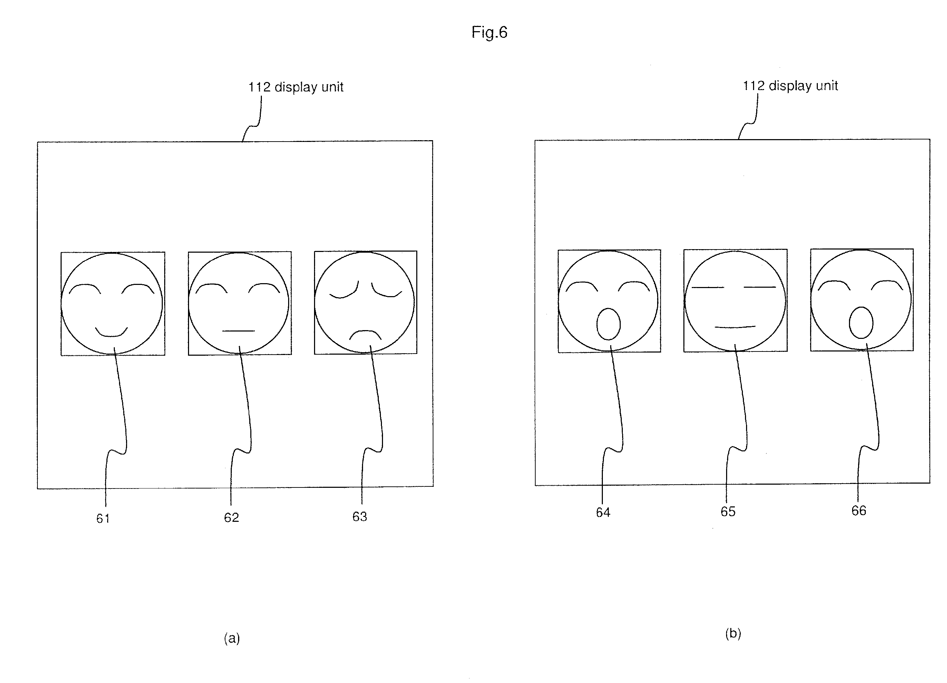

FIG. 6 shows a plurality of faces enclosed in a plurality of face display frames that are displayed on display unit 112 shown in FIG. 1, FIG. 6(a) showing a case in which the average value of the expression values of a plurality of faces is lower than the threshold value, and FIG. 6(b) showing a case in which the average value of the expression values of a plurality of faces is equal to or greater than the threshold value.

In the example shown in FIG. 6(a), assuming that the expression values of three faces 61-63 are 80%, 50%, and 0%, respectively, the average value is 43%. This average value 43% is the deciding expression value. Accordingly, control unit 110 determines that the deciding expression value is lower than the threshold value and does not transmit an image capture instruction to microcomputer 108 in Step S7 of the above-described operation flow.

On the other hand, in the example shown in FIG. 6(b), assuming that the expression values of three faces 64-66 are 100%, 10%, and 100%, respectively, the average value is 70%. This average value 70% is the deciding expression value. Accordingly, control unit 110 determines that the deciding expression value is equal to or greater than the threshold value and transmits an image capture instruction to microcomputer 108 in Step S7 of the above-described operation flow.

A case is next described in which, as the method of computing the deciding expression value, the highest expression value and lowest expression value among a plurality of expression values are excluded and the average value of the remaining expression values is taken as the deciding expression value.

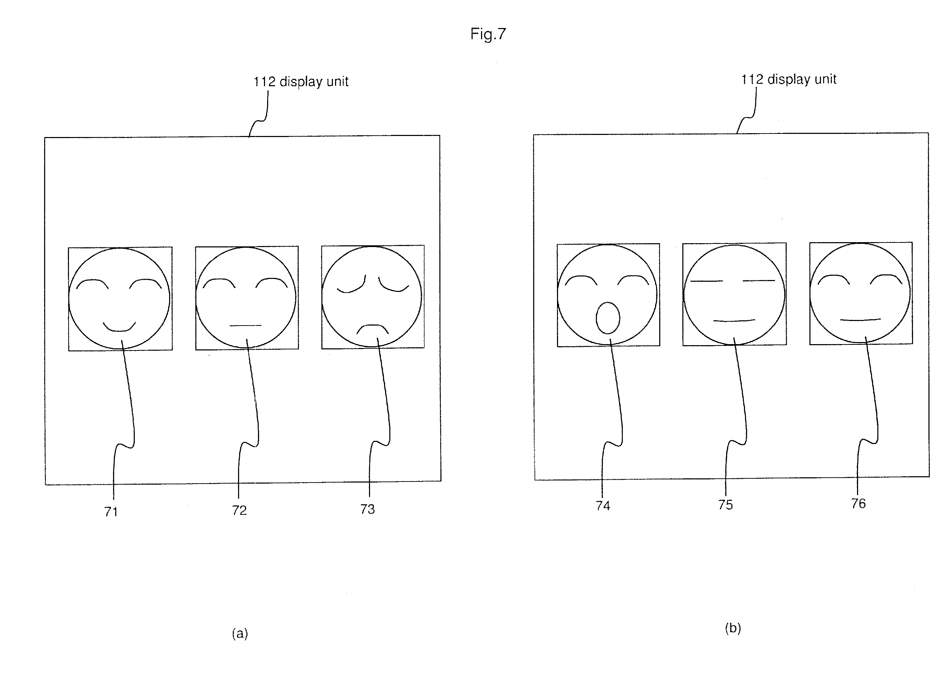

FIG. 7 shows a plurality of faces enclosed in a plurality of face display frames that are displayed on display unit 112 shown in FIG. 1, FIG. 7(a) showing a case in which the highest expression value and lowest expression value among the expression values of a plurality of faces are excluded and the average value of the remaining expression values is lower than the threshold value, and FIG. 7(b) showing a case in which the highest expression value and lowest expression value among the expression values of a plurality of faces are excluded and the average value of the remaining expression values is equal to or greater than the threshold value.

In FIG. 7(a), assuming that the expression values of three faces 71-73 are 80%, 50%, and 0%, respectively, the face showing the highest expression value is face 71 (expression value 80%), and the face showing the lowest expression value is face 73 (expression value 0%). The average value of the remaining expression values after excluding these two expression values is 50%, and this average value 50% becomes the deciding expression value. Accordingly, control unit 110 determines that the deciding expression value is lower than the threshold value and does not transmit an image capture instruction to microcomputer 108 in Step S7 of the above-described operation flow.

On the other hand, in the example shown in FIG. 7(b), assuming that the expression values of three faces 74-76 are 100%, 10%, and 70%, respectively, the face showing the highest expression value is face 74 (expression value 100%) and the face showing the lowest expression value is face 75 (expression value 10%). The average value of the remaining expression values after excluding these two expression values is 70%, and this average value 70% becomes the deciding expression value. Accordingly, control unit 110 determines that the deciding expression value is equal to or greater than the threshold value and transmits an image capture instruction to microcomputer 108 in Step S7 of the above-described operation flow.

In this method of computing the deciding expression value, a case was described in which the highest expression value and lowest expression value among a plurality of expression values are excluded and the average value is then computed and taken as the deciding expression value. However, the expression values that are excluded are not limited to the two expression values that are the highest expression value and lowest expression value, and a predetermined higher or lower number of expression values among the plurality of expression values can be excluded.

In the first exemplary embodiment described hereinabove, a case was described in which the threshold value that serves as a reference for carrying out imaging was 70%, but this threshold value can be freely set by the user.

Thus, in the first exemplary embodiment, even when a plurality of people are included in the subject, the appropriate selection and use of the above-described plurality of deciding expression values according to the imaged scene enables automatic imaging according to the user's intent.

### Second Exemplary Embodiment

In the above-described first exemplary embodiment, only one threshold value stored by control unit 110 serves as a reference when determining whether to capture an image. In the second exemplary embodiment described hereinbelow, a case is described in which a degree of priority is added to the expression values, and a plurality of threshold values are provided that include a preferred expression value threshold value for expression values to which a degree of priority has been added and a non-preferred expression value threshold value for expression values to which a degree of priority has not been added.

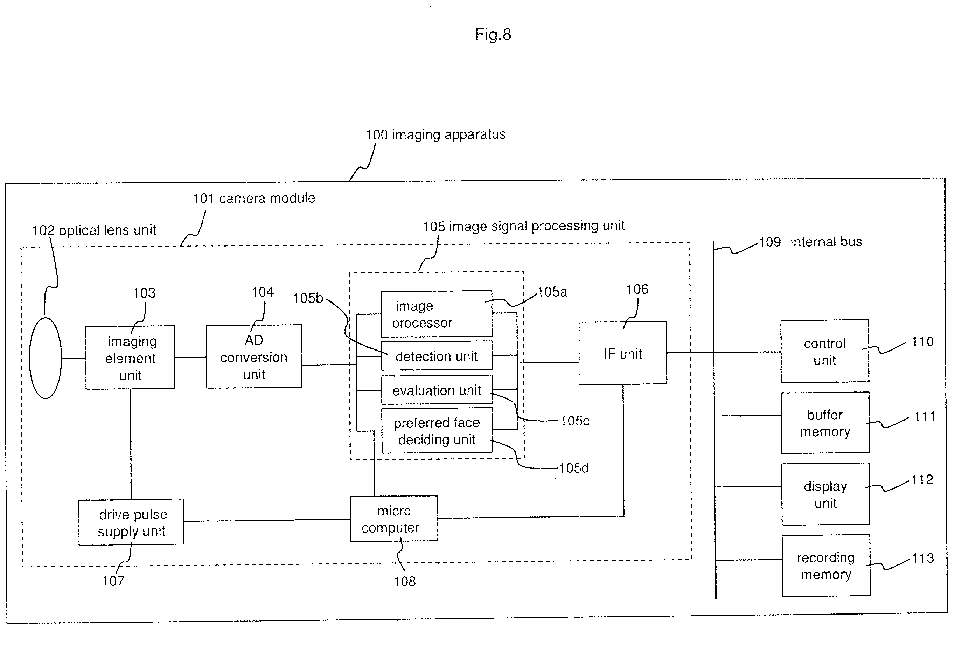

FIG. 8 shows the second exemplary embodiment of the imaging apparatus of the present invention.

In the present embodiment as shown in FIG. 8, image signal processing unit 105 shown in FIG. 1 is provided with preferred face deciding unit 105d in addition to image processor 105a, detection unit 105b, and evaluation unit 105c.

This preferred face deciding unit 105d determines the degree of priority of expression values of people's faces that are detected by detection unit 105b.

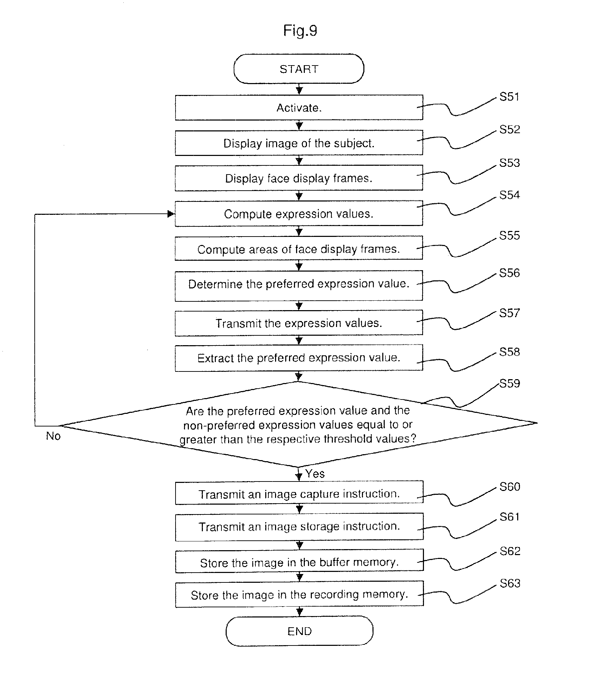

FIG. 9 is a flow chart for explaining an example of the operations when capturing the image of a subject that includes a plurality of people in imaging apparatus 100 shown in FIG. 8.

In the flow chart shown in FIG. 9, the operations up to Steps S51-S54 are identical to the operations up to Steps S1-S4 of the flow chart shown in FIG. 2, and explanation of these operations is therefore here omitted.

Preferred face deciding unit 105d computes the area of the face display frame displayed for each of the people's faces that were detected by detection unit 105b (Step S55).

Preferred face deciding unit 105d then determines the expression value of the face having the face display frame of the greatest area as the preferred expression value, which is the expression value having the highest degree of priority (Step S56). The preferred expression value that was determined is reported to evaluation unit 105c.

Evaluation unit 105c then transmits the expression values of each of the faces that were computed to control unit 110 by way of IF unit 106 and interval bus 109. At this time, evaluation unit 105c adds information to the preferred expression value indicating that this expression value is the preferred expression value (Step S57).

Control unit 110, having received the expression values that were transmitted from image signal processing unit 105, extracts the preferred expression value from among the expression values that were received (Step S58).

Control unit 110, having extracted the preferred expression value, compares the preferred expression value that was extracted with the preferred expression value threshold value that control unit 110 has stored, and further, compares the non-preferred expression values, which are expression values other than the preferred expression value, with the non-preferred expression value threshold value that control unit 110 has stored (Step S59).

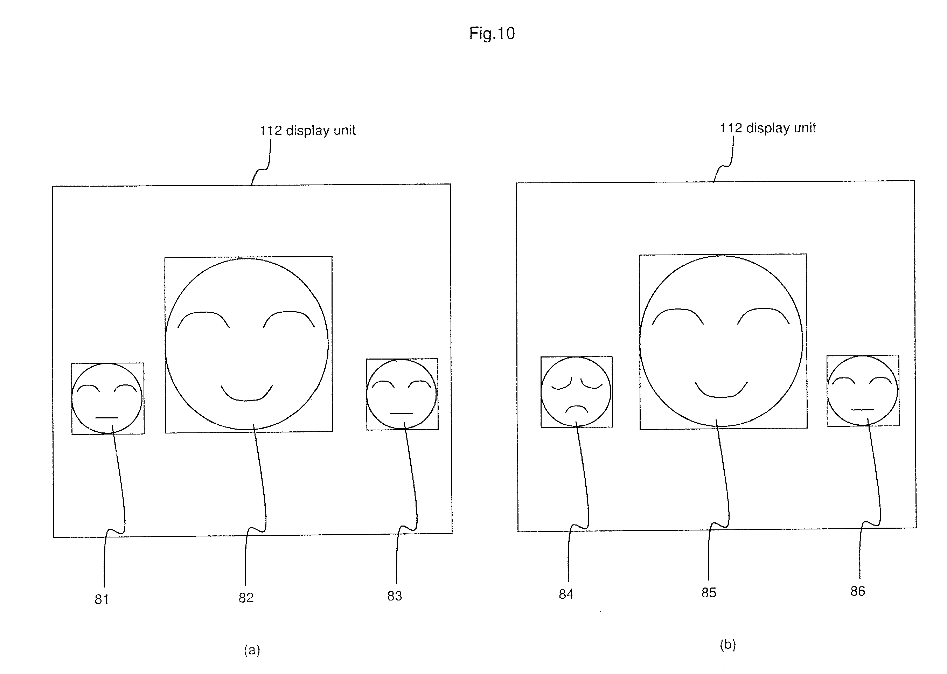

FIG. 10 shows a plurality of faces that are enclosed in a plurality of face display frames that are displayed on display unit 112 shown in FIG. 8, FIG. 10(a) showing a case in which the preferred expression value is equal to or greater than the preferred expression value threshold value and the non-preferred expression values are also equal to or greater than the non-preferred expression value threshold value, and FIG. 10(b) showing a case in which the preferred expression value is equal to or greater than the preferred expression value threshold value but the non-preferred expression values are lower than the non-preferred expression value threshold value. It is here assumed that the preferred expression value threshold value is 70% and that the non-preferred expression value threshold value is 50%. In the interest of simplifying the explanation, FIG. 10 omits representation of portions other than the faces that are enclosed in the face display frames.

In the example shown in FIG. 10(a), assuming that the expression values of three faces 81-83 are 50%, 80%, and 50%, respectively, the face display frame displayed on face 82 among the face display frames displayed on these three faces has a greater area than the face display frames displayed on the other faces 81 and 83. As a result, the expression value of 80% of face 82 is the preferred expression value, and this value is equal to or greater than the preferred expression value threshold value. In addition, the expression values of face 81 and face 83 are both 50%, and these values are equal to or greater than the non-preferred expression value threshold value. Accordingly, control unit 110 transmits an image capture instruction to microcomputer 108 (Step S60).

In the example shown in FIG. 10(b), on the other hand, the expression values of three faces 84-86 are 0%, 80%, and 50%. Of the face display frames displayed on these three faces, the face display frame displayed on face 85 has a greater area than the face display frames displayed on the other faces 84 and 86, whereby the expression value 80% of face 85 is the preferred expression value. This value is greater than the preferred expression value threshold value. However, the expression value of face 84 is 0%, and this value is lower than the non-preferred expression value threshold value. Accordingly, control unit 110 does not transmit an image capture instruction to microcomputer 108. In this case, processing returns to the operation of Step S54, and image signal processing unit 105 continues with the operations of computing the expression values and the areas of face display frames and transmitting the computed expression values to control unit 110. In addition, control unit 110 continues the operations of extracting the preferred expression values from among the plurality of expression values received from image signal processing unit 105 and comparing the extracted preferred expression values with the preferred expression value threshold value.

The subsequent operations of Steps S61-S63 are identical to Steps S9-S11 of the flow chart shown in FIG. 2.

In the above-described second exemplary embodiment, a case was described in which the degree of priority was determined by the area of the face display frames, but the expression value of the face closer to the center of the screen displayed by display unit 112 may also be taken as the preferred expression value.

Alternatively, although each of the non-preferred expression values are compared with the non-preferred expression value threshold value in the above-described second exemplary embodiment, the average value of the expression values other than the preferred expression value may be taken as the non-preferred expression value and this value is then compared with the non-preferred expression value threshold value.

Thus, in the second exemplary embodiment, a preferred expression value having a high degree of priority is selected from among a plurality of expression values and imaging is carried out based on this preferred expression value. Accordingly, this exemplary embodiment enables automatic imaging that infers the user's intent that is assumed in an imaged scene that focuses on the expression of a specific person among a plurality of people.

### Third Exemplary Embodiment

In the above-described first exemplary embodiment and second exemplary embodiment, the threshold values that served as a reference when determining whether to carry out imaging or not were fixed values in one imaging operation. In the third exemplary embodiment described hereinbelow, a case is described in which the threshold value is altered based on the plurality of expression values received by control unit 110.

An example is here described for a case in which the method used takes as the deciding expression value the average value of the plurality of expression values described in the first exemplary embodiment and the threshold value that is initially set is 70%.

In addition, the highest expression value and lowest expression value are compared, and when the expression value differential, which is the difference, is equal to or greater than a fixed value, the threshold value that was initially set is altered. More specifically, it is here assumed that when the expression value differential is equal to or greater than 80%, the threshold value is altered and the threshold value after alteration is 50%.

In the third exemplary embodiment, the configuration of the imaging apparatus is identical to that of imaging apparatus 100 shown in FIG. 1.

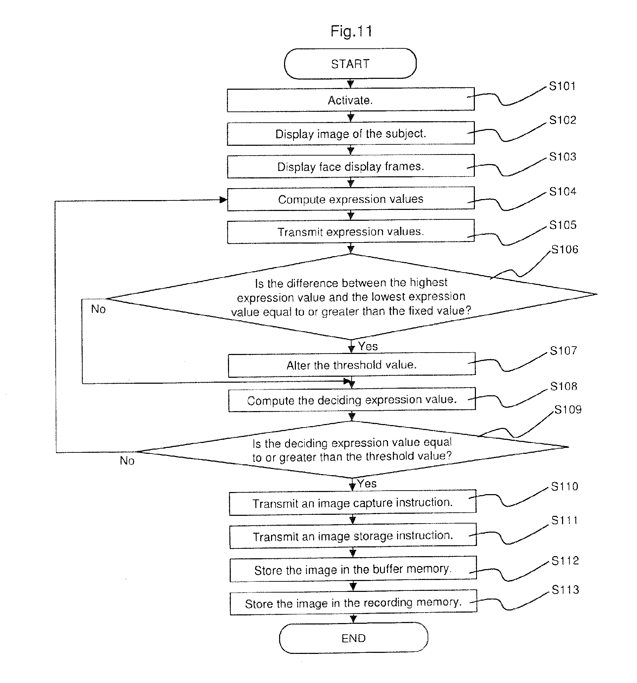

FIG. 11 is a flow chart for explaining another example of the operations in the imaging apparatus shown in FIG. 1 when imaging a subject that contains a plurality of people.

In the flow chart shown in FIG. 11, the operations up to Steps S101-S105 are identical to the operations up to Steps S1-S5 of the flow chart shown in FIG. 2 and explanation of these operations are therefore here omitted.

Control unit 110, having received a plurality of expression values transmitted from image signal processing unit 105, compares the highest expression value and lowest expression value among the plurality of expression values that were received (Step S106).

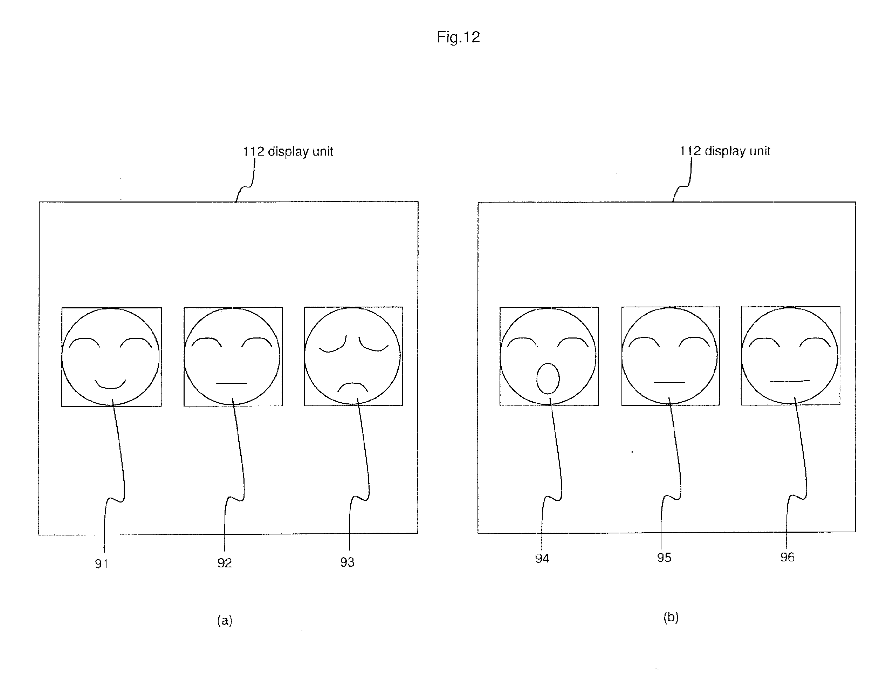

FIG. 12 shows a plurality of faces enclosed in a plurality of face display frames that are displayed in display unit 112 shown in FIG. 1. FIG. 12(a) showing a case in which the threshold value is altered, and FIG. 12(b) showing a case in which the threshold value is not altered. In the interest of simplifying the explanation, FIG. 12 omits the representation of portions other than the faces that are enclosed in face display frames.

In the example shown in FIG. 12(a), the expression values of three faces 91--93 are 80%, 50%, and 0%, respectively. The face showing the highest expression value is face 91 (expression value 80%) and the face showing the lowest expression value is face 93 (expression value 0%), and the difference between the expression values of face 91 and face 93 is therefore greater than 80%.

Accordingly, control unit 110 alters the threshold value (Step S107).

Control unit 110 then computes the deciding expression value (Step S108). Here, as previously described, the average value of a plurality of expression values is taken as the deciding expression value, and the average value of the expression values of faces 91-93 is therefore computed.

In the example shown in FIG. 12(b), in contrast, the expression values of three faces 94-96 are 100%, 50%, and 70%, respectively. The face showing the highest expression value is face 94 (expression value 100%) and the face showing the lowest expression value is face 95 (expression value 50%), whereby the difference in the expression values of face 94 and face 95 is less than 80%.

Accordingly, control unit 110 proceeds to the operation of Step S108 without altering the threshold value and computes the deciding expression value.

Steps S109-S113,that are the subsequent operations, are identical to Steps S7-S11 of the flow chart shown in FIG. 2.

Although a case was described in the above third exemplary embodiment in which the highest expression value and the lowest expression value are compared and the threshold value is then altered when the difference is equal to or greater than a fixed value, the expression values that are compared are not limited, to the highest expression value and the lowest expression value. For example, the threshold value can be altered when the difference between lowest expression value and the second lowest expression value is equal to or greater than a fixed value.

Thus, in the third exemplary embodiment, because the threshold value is automatically altered when the expression value differential of a plurality of expression values is large, imaging can be carried out automatically even when there are individual differences in the expressions of a plurality of people in the subject.

In the above-described three embodiments, a case was described in which the number of detected people's faces was three, but the number of faces is not limited to three and may be more than or fewer than three.

In addition, imaging apparatus 100 described above can be applied to all imaging apparatuses that adopt a configuration that uses camera module 101 shown in FIG. 1 and FIG. 8, such as electronic still cameras and portable telephones that incorporate cameras.

In the three embodiments described above, configurations were described for a case in which a detection unit, evaluation unit and preferred face deciding unit are incorporated in image signal processing unit 105, but the embodiment can also be implemented by incorporating the detection unit, evaluation unit, and preferred face deciding unit in control unit 110.

In addition, the processing in the imaging apparatus in the present invention, rather than being realized by the above-described dedicated hardware, may be executed by recording a program for realizing these functions on a recording medium that can be read by an imaging apparatus and then causing this program that has been recorded on a recording medium to be read and executed by the imaging apparatus. The recording medium that is readable by an imaging apparatus refers to a relocatable recording medium such as a floppy disk, a magnetooptical disk, a DVD, or a CD, or to an HDD that is incorporated in the imaging apparatus.

This application claims priority based on Japanese Patent Application No. 2008-186179 for which application was submitted on July 17, 2008 and includes all of the disclosures of that application.

## Claims

1. An imaging apparatus comprising:
a storage means for storing an image of a subject;
a detection means that detects the face of a person from a signal realized by capturing said image of the subject;
an evaluation means that, when the faces of a plurality of people are detected by said detection means, evaluates each of the expressions of the faces of said plurality of people that were detected and computes a plurality of expression values in which each of said evaluated expressions are converted to numerical values; and
a control means that computes a deciding expression value based on said plurality of expression values for determining whether said image of the subject is to be stored or not, and when said deciding expression value is equal to or greater than a predetermined threshold value, causes said image of the subject to be stored in said storage means.

2. The imaging apparatus as set forth in claim 1, wherein said control means takes the highest expression value among said plurality of expression values as said deciding expression value.

3. The imaging apparatus as set forth in claim 1, wherein said control means takes the lowest expression value among said plurality of expression values as said deciding expression value.

4. The imaging apparatus as set forth in claim 1, wherein said control means takes the average value of said plurality of expression values as said deciding expression value.

5. The imaging apparatus as set forth in claim 1, wherein said control means takes as said deciding expression value the average value of expression values that remain after excluding at least one expression value from said plurality of expression values.

6. The imaging apparatus as set forth in claim 1, further comprising a preferred face deciding means that determines a preferred face from among the faces of a plurality of people detected by said detection means; wherein said control means causes said image of the subject to be stored in said storage means when a preferred expression value, which is the expression value of said preferred face, is equal to or greater than a preferred expression value threshold value determined in advance, and when, moreover, non-preferred expression values, which are the expression values other than said preferred expression value among said plurality of expression values, are equal to or greater than a non-preferred expression value threshold value that is determined in advance.

7. The imaging apparatus as set forth in claim 1, wherein said control means selects at least two expression values from among said plurality of expression values, computes an expression value differential that is the difference between said selected expression values, and alters said predetermined threshold value when said expression value differential is equal to or greater than a fixed value.

8. An imaging method in an imaging apparatus that includes a storage means for storing an image of a subject, said imaging method comprising processes of:
detecting the face of person from a signal realized by capturing said image of the subject;
when faces of a plurality of people are detected, evaluating the expressions of each of the faces of said plurality of people that were detected and computing a plurality of expression values in which said expressions that were evaluated are each converted to a numerical value; and
computing a deciding expression value based on said plurality of expression values to determine whether said image of the subject is to be stored or not, and when said deciding expression value is equal to or greater than a predetermined threshold value, storing said image of the subject in said storage means.

9. The imaging method as set forth in claim 8, further comprising a process wherein the highest expression value among said plurality of expression values is taken as said deciding expression value.

10. The imaging method as set forth in claim 8, further comprising a process wherein the lowest expression value among said plurality of expression values is taken as said deciding expression value.

11. The imaging method as set forth in claim 8, further comprising a process wherein the average value of said plurality of expression values is taken as said deciding expression value.

12. The imaging method as set forth in claim 8, further comprising a process wherein the average value of expression values that remain after excluding at least one expression value from said plurality of expression values is taken as said deciding expression value.

13. The imaging method as set forth in claim 8, further comprising processes of:
determining a preferred face from among faces of a plurality of people that are detected; and
storing said image of the subject in said storage means when a preferred expression value that is the expression value of said preferred face is equal to or greater than a preferred expression value threshold value that is determined in advance, and when, moreover, non-preferred expression values that are the expression values other than said preferred expression value among said plurality of expression values are equal to or greater than a non-preferred expression value threshold value that is determined in advance.

14. The imaging method as set forth in claim 8, further comprising processes of:
selecting at least two expression values from among said plurality of expression values;
computing an expression value differential that is the difference between said selected expression values; and
altering said predetermined threshold value when said expression value differential is equal to or greater than a fixed value.

15. A program for causing an imaging apparatus having a storage means for storing an image of a subject to execute functions of:
detecting the face of a person from a signal realized by capturing said image of the subject;
when faces of a plurality of people are detected, evaluating the expressions of each of the faces of said plurality of people that were detected and computing a plurality of expression values in which said expressions that were evaluated are each converted to a numerical value; and
computing a deciding expression value from said plurality of expression values to determine whether said image of the subject is to be stored or not, and when said deciding expression value is equal to or greater than a predetermined threshold value, storing said image of the subject in said storage means.

16. The program as set forth in claim 15, wherein said program further causes the execution of a function wherein the highest expression value among said plurality of expression values is taken as said deciding expression value.

17. The program as set forth in claim 15, wherein said program further causes execution of a function wherein the lowest expression value among said plurality of expression values is taken as said deciding expression value.

18. The program as set forth in claim 15, wherein said program further causes the execution of a function wherein the average value of said plurality of expression values is taken as said deciding expression value.

19. The program as set forth in claim 15, wherein said program further causes the execution of a function wherein the average value of expression values that remain after excluding at least one expression value from said plurality of expression values is taken as said deciding expression value.

20. The program as set forth in claim 15, wherein said program further causes the execution of functions of:
determining a preferred face from among faces of a plurality of people that are detected; and
storing said image of the subject in said storage means when a preferred expression value that is the expression value of said preferred face is equal to or greater than a preferred expression value threshold value that is determined in advance, and when, moreover, non-preferred expression values that are the expression values other than said preferred expression value among said plurality of expression values are equal to or greater than a non-preferred expression value threshold value that is determined in advance.

21. The program as set forth in claim 15, further causing the execution of functions of:
selecting at least two expression values from among said plurality of expression values;
computing an expression value differential that is the difference between said selected expression values; and
altering said predetermined threshold value when said expression value differential is equal to or greater than a fixed value.
